# EUROPEAN PATENT APPLICATION

(11) **EP 2 463 076 A1**
(43) Date of publication of application: **13.06.2012**
(21) Application number: 11192045.0
(22) Date of filing: 06.12.2011
(51) Int. Cl.: B29C 47/14, B29D 30/48

(54) **Extruder die assembly**

(30) Priority: 10.12.2010 US 965005
(71) Applicant: The Goodyear Tire & Rubber Company, Akron, OH 44316-0001 (US)
(72) Inventor: Herndon, Michael Worth, Parkton, NC North Carolina 28371 (US); Van Earnest, Donald, Four Oaks, NC North Carolina 27524 (US); Day, Kenneth Eugene, Fayetteville, NC North Carolina 28311 (US); Looman, Jr., Ernest Wilford, Tallmadge, OH Ohio 44278 (US)
(74) Representative: Kutsch, Bernd

(57) **Abstract**

A die assembly for use with an extruder is disclosed. The die assembly has a preformer die (110) having a preformer shaped hole (120) for forming the desired shape of a component to be extruded, wherein the shaped hole is not symmetrical and has a small first end (124) and a large second end (122). The die assembly further includes a final die plate (128) having a final shaping hole (129), the final shaping hole is not symmetrical and has a large first end (132) and a small second end (130). The preformer die (110) and the final die plate (128) are positioned adjacent each other wherein the small first end (124) of the preformer shaped hole is aligned with the large first end (132) of the final shaping hole, and wherein the large second end (122) of the preformer shaped hole is aligned with the small second end of the final shaping hole (130).

## Description

### Field of the Invention

The invention relates to the field of tire manufacturing, and more particularly to tire component manufacturing.

### Background of the Invention

In tire manufacturing, numerous tire components are formed of a plurality of rubber parts. Rubber tire components such as the tire apex, sidewall, and tread are formed by an extrusion process. One type of extruder typically used in tire manufacturing is a screw extruder. The screw extruder typically has a long chamber with a screw centered in the channel, wherein the screw masticates the rubber. The end of the channel typically has a die having a hole formed therein. The shape of the hole dictates the cross-sectional shape of the rubber part to be made. The extruder pressure forces the rubber through the small die hole forming the part to be made in a continuous manner. The desired rubber part is obtained by cutting the extruded part to a given length.

Some rubber tire components can be more challenging to manufacture. An apex has a triangular cross-sectional shape that is extruded into a linear piece having the desired triangular cross-section. Depending upon the tire application, some apexes have triangular cross-sections which are tall and thin. Since the shape of the die mimics the shape of the desired rubber component, the die hole also has a thicker region and a much thinner region. The rubber tends to follow the path of least resistance, which means that the rubber does not want to flow into the thin region of the die. This can result in malformed apex articles that must be scrapped. Thus it is desired to have an improved die and method of manufacturing complex rubber articles.

### Summary of the Invention

The invention relates to a die assembly in accordance with claim 1.

Dependent claims refer to preferred embodiments of the invention.

### Brief Description of the Drawings

The invention will be described by way of example and with reference to the accompanying drawings in which:
FIG. 1 is a cross-sectional view of a schematic of a screw extruder;
FIG. 2 is a front view of the conventional sub components of the die for use in the extruder of FIG. 1;

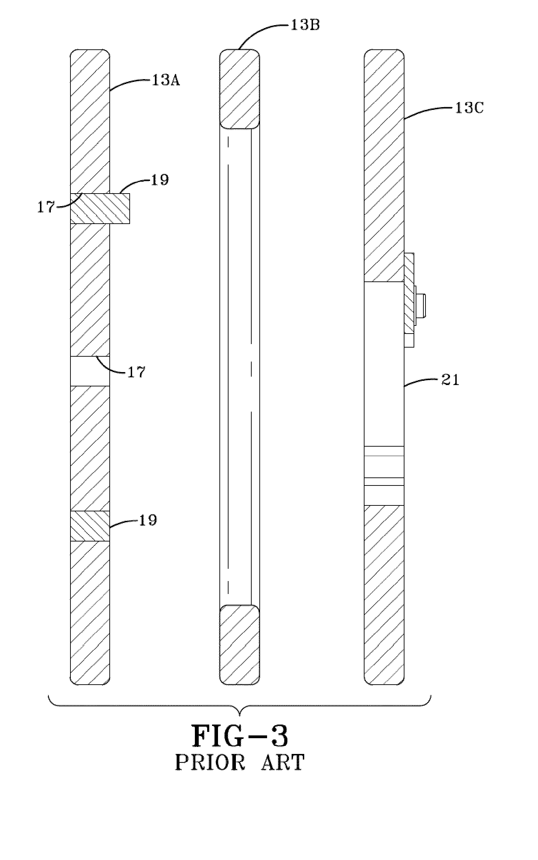

FIG. 3 is a side view of the sub-components of the die of FIG. 2;
FIG. 4 is a front view of the final die plate of the present invention;
FIG. 5 is a front view of the preformer plate of the present invention;
FIG. 6 is a cross-sectional view of the preformer plate in the direction 6-6 of

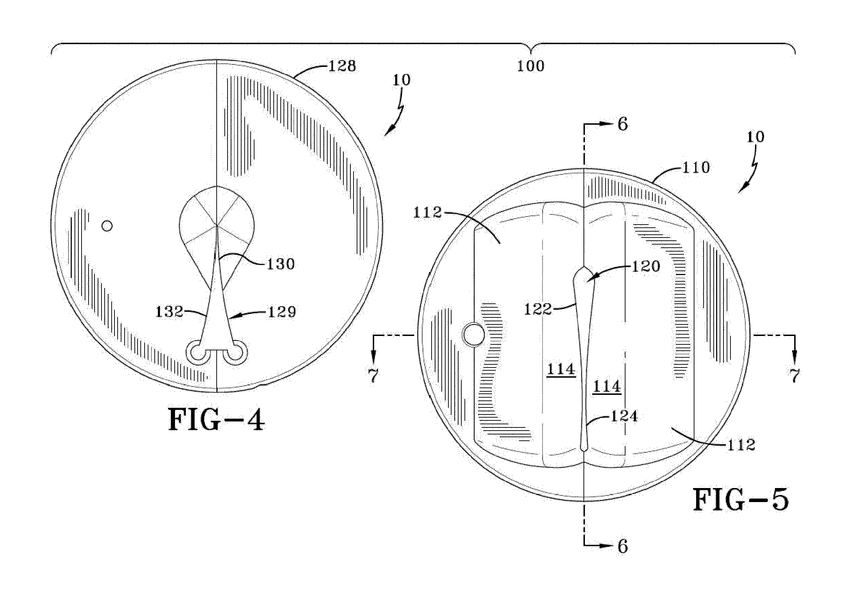

FIG. 5; and

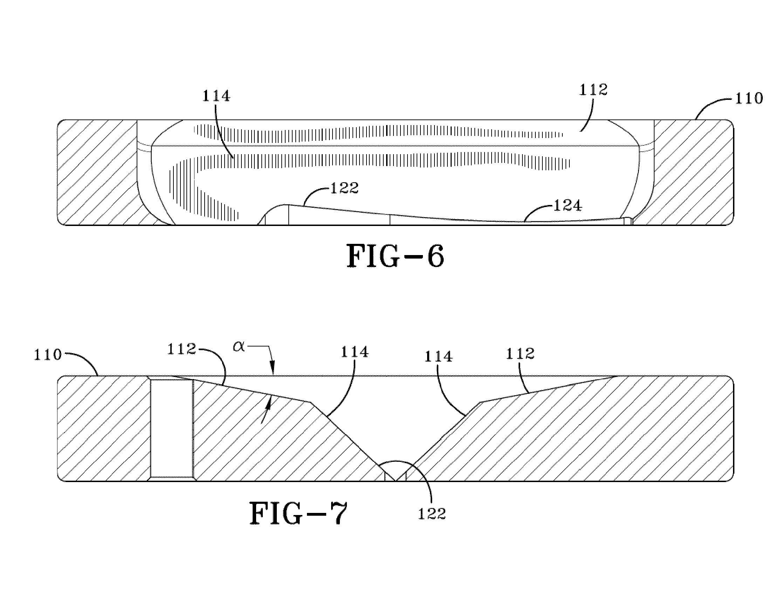

FIG. 7 is a cross-sectional view of the preformer plate in the direction 7-7 of
FIG. 5.

### Detailed Description of the Invention

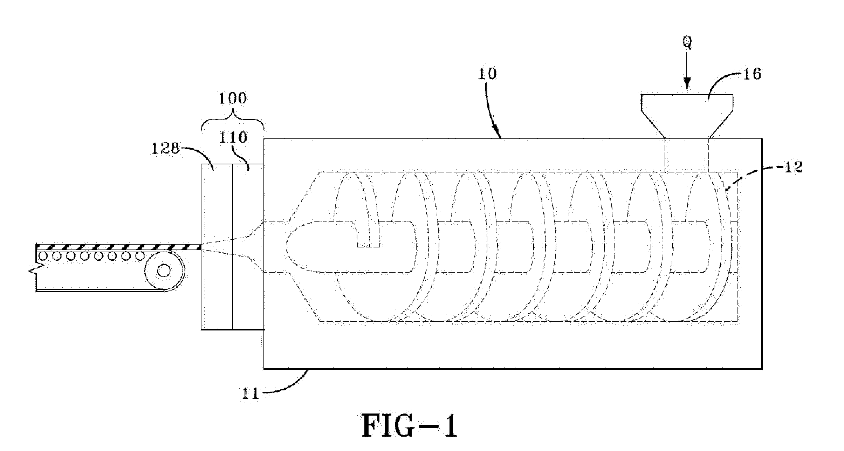

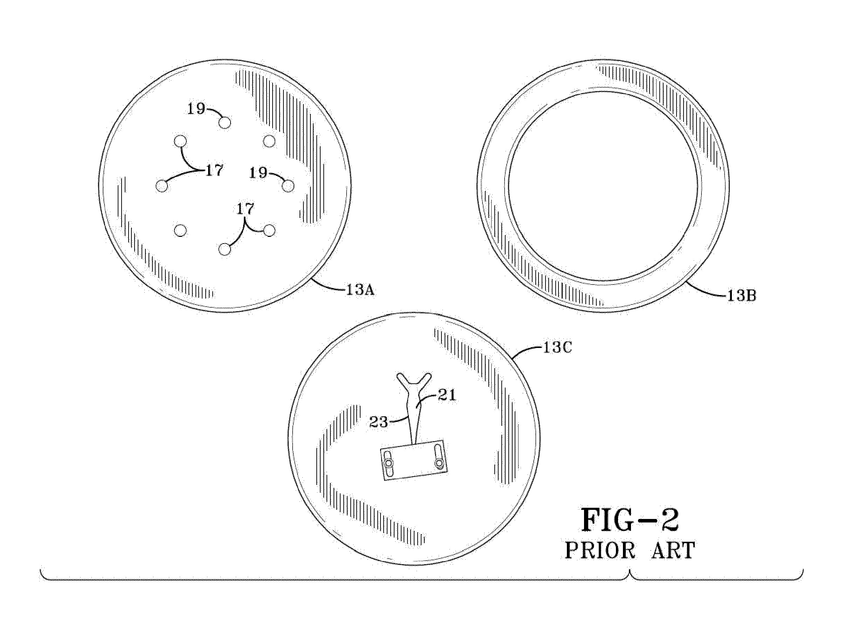

Figure 1 illustrates an extruder 10 useful for extruding rubber articles such as tire components. The extruder 10 comprises a cylindrically shaped body 11 that houses an internal screw 12. The extruder is arranged such that a rubber material Q is fed into the main body portion 11 via a hopper 16. As the screw 12 rotates, the rubber is advanced forward through the main body. The rubber is masticated as it is worked on via the screw. The rubber is then passed through a preformer 110 and a die 128 before exiting the extruder outlet. A prior art die assembly is shown in FIG. 2 and comprises a pressure plate 13A, a intermediate chamber 13B, and a final die plate 13C. The pressure plate 13A comprises a flat disk having multiple holes 17. The holes are unplugged or plugged by trial and error in an attempt to direct the flow of rubber. The rubber then passes through an intermediate chamber 13B. The intermediate chamber is a blank disk forming an empty passageway that the rubber expands into. The rubber travels from the intermediate chamber 13B into a final shaping die 13C. The shaping die 13C is a flat plate having a shaped hole 21 which forms the final shape of the rubber article. The shaped hole 21 as shown can be used to form a triangular shaped apex having a thin tip. The invention is not limited to this shape or tire component, and can be used to form other shapes. Pins 19 can be arranged in the pressure plate to try and direct the rubber flow through the narrow passageway 23 forming the thin tip. The problem with the prior art setup is that it requires trial and error and lacks any positive control over the flow.

The die assembly 100 of the present invention is shown in FIGS. 4 and 5. The pressure plate 13A and intermediate chamber 13B is replaced by the preformer plate 110. The preformer plate 110 is formed of a round disk having a shaped hole 120 for forming the desired shape of an apex or other tire component. A first beveled portion 114 completely surrounds the shaped hole 120 and functions as a funnel to direct the rubber into the shaped hole 120. The preformer plate further comprises an optional second beveled portion 112 that is located adjacent the first beveled portion. Preferably, the second beveled portion 112 completely surrounds the first beveled portion. Preferably, the angle of inclination of the second beveled portion 112 is less than the angle of inclination of the first portion 114. The angle of inclination α is measured with respect to the flat plane of the upper surface of the plate. Thus the first and second beveled portions work together to funnel the rubber flow into the preformer hole 120.

It is important to note that the shape of the preformer hole 120 is an important aspect of the invention. As shown in FIG. 5, the preformer hole 120 has a large bulbous end 122 and a long thin end 124 opposite the bulbous end. The preformer functions to direct a large mass of rubber through the bulbous end 122 of the preformer plate 110 which is aligned for reception into the narrow passageway 130 of the final die plate 128. Thus the large bulbous end 122 of the preformer functions to load the rubber for entry into the long thin end 130. The long thin end 124 of the preformer hole is in alignment with a large bulbous end 132 of the die hole. Thus the preformer hole shape is rotated 180 degrees out of phase with the final die hole shape 129.

## Claims

1. A die assembly for use with an extruder (10), the die assembly (100) comprising a preformer die (110) having a preformer shaped hole (120) for forming the desired shape of a component to be extruded, wherein the performer shaped hole (120) has a thin first end (124) and an enlarged second end (122), and a final die plate (128) having a final shaping hole (129), the final shaping hole (129) having an enlarged first end (132))and a thin second end (130), wherein the preformer die (110) and the final die plate (128) are positioned adjacent each other, wherein the thin first end (124) of the preformer shaped hole (120) is aligned with the enlarged first end (132) of the final shaping hole (129), and wherein the enlarged second end (122) of the preformer shaped hole (120) is aligned with the thin second end (130) of the final shaping hole (129).

2. The die assembly of claim 1 wherein the preformer shaped hole (120) is surrounded by a first beveled portion (114).

3. The die assembly of claim 2 wherein the first beveled portion (114) is surrounded by a second beveled portion (112).

4. The die assembly of claim 3 wherein the angle of inclination of the first beveled portion (114) is greater than the angle of inclination of the second beveled portion (112).

5. The die assembly of claim 1 wherein the preformer shaped hole (120) is not symmetrical.

6. The die assembly of claim 1 or 5 wherein the final shaping hole (129) is not symmetrical.

7. An extruder comprising a body having an inlet end and an outlet end and an internal passageway in fluid communication with the inlet end and the outlet end, a screw (12) rotatably mounted within the internal passageway, and a die assembly (100) in accordance with at least one of the previous claims connected to the outlet end.
